# EUROPEAN PATENT APPLICATION

(11) **EP 4 586 227 A1**
(43) Date of publication of application: **16.07.2025**
(21) Application number: 24814551.8
(22) Date of filing: 30.05.2024
(51) Int. Cl.: G08G 1/14, G08B 21/24

(54) **VEHICLE EARLY WARNING METHOD AND APPARATUS, DEVICE, STORAGE MEDIUM, AND PRODUCT**

(30) Priority: 01.06.2023 CN 202310651331
(71) Applicant: Chery Automobile Co., Ltd., Wuhu, Anhui 241006 (CN); Wuhu Automobile Advanced Technology Institute, Wuhu, Anhui 241006 (CN)
(72) Inventor: HUANG, Yong, Wuhu, Anhui 241006 (CN); LI, Tao, Wuhu, Anhui 241006 (CN); LIU, Yunhui, Wuhu, Anhui 241006 (CN); WU, Fusheng, Wuhu, Anhui 241006 (CN); CAI, Wenqing, Wuhu, Anhui 241006 (CN)
(74) Representative: Yang, Shu
(86) International application number: PCT/CN2024/096405
(87) International publication number: WO 2024/245355

(57) **Abstract**

The present disclosure relates to the technical field of vehicles, and discloses a vehicle early warning method and apparatus, a device, a storage medium, and a product. According to the method provided by the present disclosure, before a user parks a vehicle, whether there is a no parking sign near the vehicle is detected first; when there is no no parking sign, whether there is a target object near the vehicle is detected; when there is a target object and the target object moves towards a first vehicle, the distance between the target object and the vehicle is determined; an warning signal is sent on the basis of the distance; and the warning signal prompts the user not to park the vehicle at the current position, thereby preventing the user from parking illegally, and avoiding affecting the travel of other users. Additionally, according to the method, a navigation route between a third position where parking is allowed and a second position where the first vehicle is located is determined, and by means of the navigation route, the user is guided to go to the third position for parking, so that the parking requirements of the user are met. Therefore, according to the method, users can be prevented from parking illegally, and the parking requirements of the users can also be met.

## Description

This application claims priority to Chinese Patent Application No. 202310651331.0, filed on June 1, 2023, and entitled "VEHICLE EARLY WARNING METHOD AND APPARATUS, DEVICE, STORAGE MEDIUM, AND PRODUCT", the contents of which are incorporated herein by reference in its entirety.

### TECHNICAL FIELD

The present disclosure relates to the field of vehicle technology, and in particular relates to a vehicle warning method, an apparatus, a device, a storage medium, and a product.

### BACKGROUND

In recent years, with the sustained and rapid development of the economy, people's mode of transportation is undergoing a transformation, and the number of private cars is increasing rapidly year by year, consequently giving rise to parking issues. Some roads are equipped with no-parking signs, and when drivers see the no-parking signs, they know that parking is prohibited on that road, and they will not park there. However, on other roads where no no-parking sign is installed but parking is still forbidden, drivers may unknowingly park their vehicles, which is a parking violation and is likely to affect the travel of other drivers. Therefore, for roads without no-parking signs but where parking is prohibited, how to remind drivers in time during their parking to avoid parking violations has become an urgent problem to be solved.

### SUMMARY

Embodiments of the present disclosure provide a vehicle warning method, an apparatus, a device, a storage medium, and a product, which not only prevents drivers from parking violations but also meets drivers' parking needs. The technical solution is as follows.

In one aspect, a vehicle warning method is provided. The method includes:
acquiring multiple images captured by a camera module of a first vehicle;
performing sign detection on the multiple images, and performing target detection on the multiple images in response to detecting that no no-parking sign is contained in the multiple images;
determining a forward direction of a target object in response to detecting that the target object is contained in the multiple images, wherein the target object is an object responsible for managing parking violations;
determining a first distance in response to detecting that the forward direction of the target object is toward the first vehicle, wherein the first distance is a distance between a first position and a second position, the first position being a position where the target object is located, and the second position being a position where the first vehicle is located;
generating a warning signal based on the first distance, wherein the warning signal is used to remind a driver of the first vehicle not to park the first vehicle at the second position; and
determining a third position where the first vehicle is allowed to park, acquiring a navigation route from the second position to the third position, and broadcasting the navigation route.

In some embodiments, one or more second vehicles are contained in the multiple images, the one or more second vehicles being located in front of or behind the first vehicle;
generating the warning signal based on the first distance includes:
determining a first quantity, wherein the first quantity is a quantity of second vehicles located between the first position and the second position;
determining a first duration based on the first quantity, wherein the first duration is a duration required for the target object to move from the first position to the second position; and
generating the warning signal and broadcasting a first voice message, wherein the first voice message contains the first duration and the first distance, and the first voice message is used to remind the driver to move the first vehicle away from the second position.

In some embodiments, determining the first duration based on the first quantity includes:
performing action recognition on the target object to acquire an action recognition result of the target object;
determining a second duration in a case where the action recognition result includes a target action, wherein the target action is an action performed by the target object based on a parking position of the second vehicle, and the second duration is a duration required for the target object to complete the target action; and
determining the first duration based on the first quantity and the second duration.

In some embodiments, performing the target detection on the multiple images includes:
performing the target detection on each of the multiple images;
extracting a clothing feature of a human target in response to detecting that the human target is contained in the image; and
determining that the target object is detected in the image in a case where the clothing feature of the human target matches a preset clothing feature, wherein the preset clothing feature is a clothing feature of the object responsible for managing parking violations.

In some embodiments, the method further includes:
determining a second distance in a case where the driver is not in the first vehicle, wherein the second distance is a distance between a fourth position and the second position, the fourth position being a position where the driver is located;
determining a third duration based on the second distance, wherein the third duration is a duration required for the driver to move from the fourth position to the second position; and
sending a vehicle relocation notification to a terminal device of the driver based on the first duration and the third duration, wherein the vehicle relocation notification is used to notify the driver to move the first vehicle.

In some embodiments, sending the vehicle relocation notification to the terminal device of the driver based on the first duration and the third duration includes:
determining a duration difference between the first duration and the third duration;
determining an urgency level for vehicle relocation based on the duration difference; and
sending the vehicle relocation notification to the terminal device, wherein the vehicle relocation notification contains the urgency level for vehicle relocation.

In some embodiments, the method further includes:
broadcasting a second voice message in a case where the first distance is less than a preset distance and the driver is not in the first vehicle, wherein the second voice message is used to remind the target object that the driver has been instructed to move the vehicle.

In another aspect, a vehicle warning apparatus is provided. The apparatus includes:
a first acquiring module, configured to acquire multiple images captured by a camera module of a first vehicle;
a detecting module, configured to perform sign detection on the multiple images, and performing target detection on the multiple images in response to detecting that no no-parking sign is contained in the multiple images;
a first determining module, configured to determine a forward direction of a target object in response to detecting that the target object is contained in the multiple images, wherein the target object is an object responsible for managing parking violations;
a second determining module, configured to determine a first distance in response to detecting that the forward direction of the target object is toward the first vehicle, wherein the first distance is a distance between a first position and a second position, the first position being a position where the target object is located, and the second position being a position where the first vehicle is located;
a warning module, configured to generate a warning signal based on the first distance, wherein the warning signal is used to remind a driver of the first vehicle not to park the first vehicle at the second position; and
a third determining module, configured to determine determining a third position where the first vehicle is allowed to park, acquire a navigation route from the second position to the third position, and broadcast the navigation route.

In some embodiments, one or more second vehicles are contained in the multiple images, and the one or more second vehicles are located in front of or behind the first vehicle;
the warning module is configured to: determine a first quantity, wherein the first quantity is a quantity of second vehicles located between the first position and the second position; determine a first duration based on the first quantity, wherein the first duration is a duration required for the target object to move from the first position to the second position; and generate the warning signal and broadcast a first voice message, wherein the first voice message contains the first duration and the first distance, and the first voice message is used to remind the driver to move the first vehicle away from the second position.

In some embodiments, the warning module is configured to: perform action recognition on the target object to acquire an action recognition result of the target object; determine a second duration in a case where the action recognition result includes a target action, wherein the target action is an action performed by the target object based on a parking position of the second vehicle, and the second duration is a duration required for the target object to complete the target action; and determine the first duration based on the first quantity and the second duration.

In some embodiments, the detecting module is configured to: perform the target detection on each of the multiple images; extract a clothing feature of a human target in response to detecting that the human target is contained in the image; and determine that the target object is detected in the image in a case where the clothing feature of the human target matches a preset clothing feature, wherein the preset clothing feature is a clothing feature of the object responsible for managing parking violations.

In some embodiments, the apparatus includes:
a fourth determining module, configured to determine a second distance in a case that the driver is not in the first vehicle, wherein the second distance is a distance between a fourth position and the second position, the fourth position being a position where the driver is located;
a fifth determining module, configured to determine a third duration based on the second distance, wherein the third duration is a duration required for the driver to move from the fourth position to the second position; and
a sending module, configured to send a vehicle relocation notification to a terminal device of the driver based on the first duration and the third duration, wherein the vehicle relocation notification is used to notify the driver to move the first vehicle.

In some embodiments, the sending module is configured to: determine a duration difference between the first duration and the third duration; determine an urgency level for vehicle relocation based on the duration difference; and send the vehicle relocation notification to the terminal device, wherein the vehicle relocation notification contains the urgency level for vehicle relocation.

In some embodiments, the apparatus includes:
a broadcasting module, configured to broadcast a second voice message in a case where the first distance is less than a preset distance and the driver is not in the first vehicle, wherein the second voice message is used to remind the target object that the driver has been instructed to move the vehicle.

In another aspect, an electronic device is provided. The electronic device includes a processor and a memory storing one or more pieces of program code, wherein the processor, when loading and executing the one or more pieces of program code, is caused to perform the vehicle warning method according to any one of the above embodiments.

In another aspect, a computer-storage medium is provided. The computer storage medium stores one or more instructions therein, wherein the one or more instructions, when loaded and executed by a processor, cause the process to perform the vehicle warning method according to any one of the above embodiments.

In another aspect, a computer program product is provided. The computer program product stores one or more instructions therein, wherein the one or more instructions, when loaded and executed by a processor, cause the process to perform the vehicle warning method according to any one of the above embodiments.

Embodiments of the present disclosure provide a vehicle warning method. In the case that no no-parking sign near the vehicle is determined through image recognition technology when the driver parks the vehicle, the method determines whether there is a target object, who is responsible for managing parking violations, approaching the first vehicle. In the case that the target object is approaching the first vehicle, it indicates that the current road segment, despite lacking the no-parking sign, prohibits parking. In this case, a warning signal is generated to remind the driver against parking at the current location, thereby preventing parking violations and ensuring unobstructed traffic flow for other drivers.

Moreover, the method also determines a navigation route between the third position where parking is allowed and the second position where the first vehicle is located, the navigation route guides the driver to go to the third position to park. In this way, the method not only avoids parking violations, but also satisfies the parking needs of the driver.

It should be understood that the general description above and the detailed description that follows are merely exemplary and do not limit the present disclosure.

### BRIEF DESCRIPTION OF THE DRAWINGS

FIG. 1 is a schematic diagram of an implementation environment of a vehicle warning method according to some embodiments of the present disclosure;
FIG. 2 is a flowchart of a vehicle warning method according to some embodiments of the present disclosure;
FIG. 3 is a flowchart of a vehicle warning method according to some embodiments of the present disclosure;
FIG. 4 is a schematic diagram of vehicle warning according to some embodiments of the present disclosure;
FIG. 5 is a structural schematic diagram of a vehicle warning apparatus according to some embodiments of the present disclosure; and
FIG. 6 is a structural block diagram of an electronic device according to some embodiments of the present disclosure.

### DETAILED DESCRIPTION

For clearer descriptions of the technical solutions and advantages of the present disclosure, embodiments of the present disclosure are further described in detail.

The terms "first", "second", "third" and "fourth" in the specification, claims, and the accompanying drawings of the present disclosure described herein are used to distinguish objects rather than to describe a particular order. In addition, the terms "comprise/include" and "has/have", and any variations thereof, are intended to cover non-exclusive inclusion. For example, a process, method, system, product, or device that includes a series of steps or units is not limited to the listed steps or units, but optionally also includes steps or units that are not listed, or optionally includes other steps or units that are inherent to the process, method, product or device.

It should be noted that the information (including but not limited to user equipment information, user personal information, etc.), data (including but not limited to data used for analysis, data stored, data displayed, etc.), and signals involved in the present disclosure are authorized by the user or are fully authorized by the parties. The collection, use, and processing of relevant data are required to comply with relevant laws, regulations, and standards of the relevant countries and regions. For example, the images, commands, locations, etc. involved in the present disclosure are acquired with full authorization.

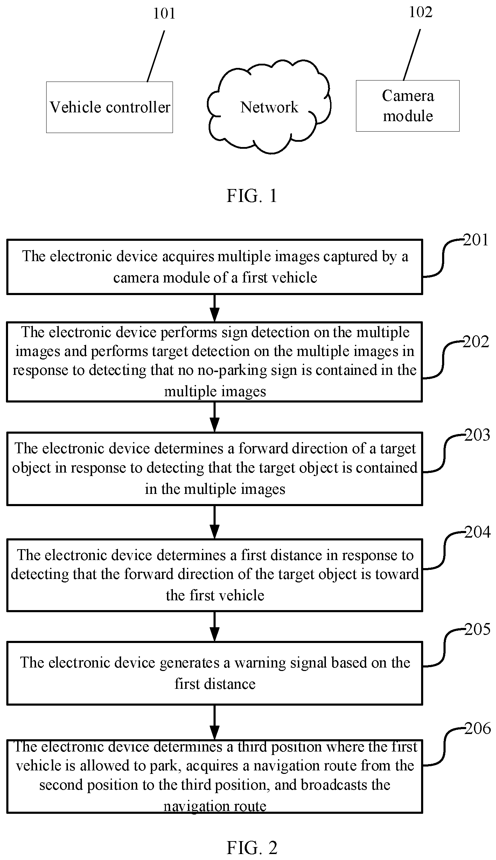

FIG. 1 is a schematic diagram of an implementation environment of a vehicle warning method according to some embodiments of the present disclosure. The implementation environment includes an electronic device.

In some embodiments, the electronic device is provided as a vehicle controller 101. Accordingly, the implementation environment further includes a camera module 102, and the vehicle controller 101 is connected to the camera module 102 via a wireless or wired network, which is not limited herein.

The vehicle controller 101 and the camera module 102 are mounted in the same vehicle, which may be an electric vehicle, a hybrid vehicle, or a fuel vehicle, which is not limited herein.

In some embodiments, the camera module 102 is at least one of a front-view camera, a rear-view camera, a surround-view camera, or a vehicle recorder of the vehicle. In the case that the camera module 102 is the front-view camera, it may be mounted according to the actual needs. For example, the camera module 102 is mounted on the front windshield, or above or below the front license plate frame, which is not limited herein. In the case that the camera module 102 is the rear-view camera of the vehicle, it may be mounted on the trunk or in other locations without specific limitations. In the case that the camera module 102 is the surround-view camera of the vehicle, it may be mounted around the vehicle body.

In some embodiments, the camera module 102 captures images of the front, rear, and/or surroundings of the vehicle, and sends the captured images to the vehicle controller 101. The vehicle controller 101 determines, based on the images sent by the camera module 102, whether parking is allowed at the current second position and sends a warning signal in the case that parking is not allowed, so as to remind the driver not to park the vehicle at the current position. Moreover, the vehicle controller 101 determines a third position where parking is allowed and identifies a navigation route from the current second position to the third position, thereby guiding the driver to the third positon to park the vehicle.

In some other embodiments, the electronic device is provided as an image processor in the camera module. The camera module includes an image processor and an image sensor, and the image sensor converts optical signals into electrical signals to realize the function of the camera module to capture images, which are then sent to the image processor. The image processor executes the method provided in the present disclosure based on the images sent by the image sensor.

In the embodiments of the present disclosure, the electronic device is taken as an example of the vehicle controller for illustration.

FIG. 2 is a flowchart of a vehicle warning method according to some embodiments of the present disclosure. The method includes the following steps.

**In step 201, the electronic device acquires multiple images captured by a camera module of a first vehicle.**

The multiple images include images of the front, rear, and/or surroundings of the first vehicle. In some embodiments, the camera module captures images in real time or periodically and then sends the captured images to the electronic device. In some other embodiments, the camera module captures images when the first vehicle is parking and then sends the captured images to the electronic device.

**In step 202, the electronic device performs sign detection on the multiple images and performs target detection on the multiple images in response to detecting that no no-parking sign is contained in the multiple images.**

For each of the multiple images acquired by the electronic device, the sign detection is performed on the image to detect whether the no-parking sign is contained in the image. In the case that the no-parking sign is detected in the image, a third voice message is broadcast, the third voice message is used to remind the driver that parking is prohibited at the second position where the first vehicle is currently located. In the case that the no-parking sign is not detected in the image, the target detection is performed on the image to detect whether the target object is contained in the image. In the case that the target object is detected in the image, step 203 is executed; in the case that the target object is not detected in the image, the electronic device performs the sign detection on the next received image, and so on. Only in the case that the target object is detected in the image will step 203 be executed.

The no-parking sign refers to a sign indicating that parking is prohibited. For example, the no-parking sign is a no-parking signboard or a no-parking parking cylinder. In some embodiments of the present disclosure, the target object refers to an object responsible for managing parking violations. For example, the target object is a road traffic management personnel or a driver of another vehicle, the target object may also be a road volunteer or a pedestrian affected by the traffic, etc., which is not limited herein.

It should be noted that after broadcasting the third voice message, the electronic device determines whether the first vehicle has been moved. In the case that the first vehicle has not been moved, the electronic device also performs the target detection on the acquired image to detect whether the target object is contained in the image. If the target object is detected in the image, step 203 is executed. In the case that the first vehicle has been moved, the electronic device does not perform the target detection on the acquired image, i.e., the electronic device does not perform further processing.

**In step 203, the electronic device determines a forward direction of a target object in response to detecting that the target object is contained in the multiple images.**

In the case that the target object is detected in the multiple images, the electronic device performs the face detection on the target object in the multiple images. If no face is detected in the multiple images, then the forward direction of the target object is determined to be away from the first vehicle, and the electronic device does no further processing. If a human face is detected in the multiple images, then the forward direction of the target object is determined to be toward the first vehicle, and then step 204 is executed.

**In step 204, the electronic device determines a first distance in response to detecting that the forward direction of the target object is toward the first vehicle.**

The first distance is a distance between a first position and a second position, the first position is a position where the target object is located and the second position is a position where the first vehicle is located.

**In step 205, the electronic device generates a warning signal based on the first distance.**

The warning signal is used to remind the driver of the first vehicle not to park the first vehicle at the second position. The electronic device generates the warning signal via an audio component of the vehicle and broadcasts a fourth voice message via the audio component. The fourth voice message carries the first distance for reminding the driver of the first vehicle to drive away from the second position. For example, the fourth voice message is "Parking is prohibited here. The target object is approaching, currently 50 meters away. Please depart immediately".

After issuing the warning signal, the electronic device also determines whether the first vehicle is moved. If the first vehicle is not moved, the warning signal is issued again, and the degree of the warning signal is enhanced. For example, the electronic device issues the warning signal for the first time with the sound intensity of the first intensity, and issues the warning signal for the second time with the sound intensity of the second intensity, and the second intensity is greater than the first intensity. In the embodiments of the present disclosure, if the driver of the first vehicle does not depart away the first vehicle in time, the driver of the first vehicle will be warned by the high intensity warning signal, so as to improve the warning effect.

**In step 206, the electronic device determines a third position where the first vehicle is allowed to park, acquires a navigation route from the second position to the third position, and broadcasts the navigation route.**

The electronic device determines a candidate region range and determines a third position within the candidate area range where the first vehicle is allowed to park. The candidate region range is defined as a range composed of location points whose distance from the second position does not exceed a preset distance. There may be either one or multiple third positions. When there are multiple third positions, the electronic device selects the one closest to the second position. Alternatively, when there are multiple third positions, the electronic device determines the destination of the current journey of the first vehicle and then picks the third position closest to this destination. For example, if the destination of the current journey of the first vehicle is a shopping mall, the electronic device determines the third position closest to the shopping mall from the multiple third positions. Subsequently, based on the navigation route from the second position to the selected third position, the electronic device instructs the driver of the first vehicle to drive the vehicle to the third position for parking, which reduces the walking distance for the driver of the first vehicle and enhances the driving experience.

The electronic device determines the navigation route that takes the shortest time to travel from the second position to the third position, and broadcasts the navigation route via the audio component to direct the driver of the first vehicle to travel the first vehicle to the third position for parking, thereby satisfying the driver's parking needs.

Embodiments of the present disclosure provide a vehicle warning method. In the case that no no-parking sign near the vehicle is determined through image recognition technology when the driver parks the vehicle, the method determines whether there is a target object, who is responsible for managing parking violations, approaching the first vehicle. In the case that the target object is approaching the first vehicle, it indicates that the current road segment, despite lacking the no-parking sign, prohibits parking. In this case, a warning signal is generated to remind the driver against parking at the current location, thereby preventing parking violations and ensuring unobstructed traffic flow for other drivers.

Moreover, the method also determines a navigation route between the third position where parking is allowed and the second position where the first vehicle is located, the navigation route guides the driver to go to the third position to park. In this way, the method not only avoids parking violations, but also satisfies the parking needs of the driver.

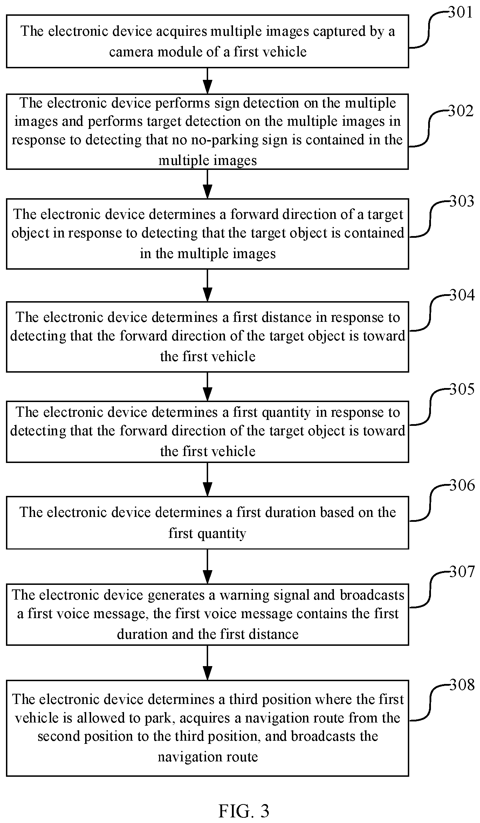

FIG. 3 is a flowchart of a vehicle warning method according to some embodiments of the present disclosure. The method is performed by an electronic device and includes the following steps.

**In step 301, the electronic device acquires multiple images captured by a camera module of a first vehicle.**

The multiple images include images of the front, rear, and/or surroundings of the first vehicle. In some embodiments, the camera module captures images in real time or periodically and then sends the captured images to the electronic device. In some other embodiments, the camera module captures images when the first vehicle is parking and then sends the captured images to the electronic device.

The camera module may send each captured image to the electronic device as soon as it is acquired. Alternatively, the camera module may first capture multiple images and send the multiple images together once the number of the captured images reaches the preset quantity. The camera module may capture multiple images and transmit all images captured within a cycle together when the time interval between the current time and the last image transmission reaches the cycle. In the embodiments of the present application, no specific limitation is imposed on this.

The multiple images include one or more second vehicles, the one or more second vehicles are disposed in front of or behind the first vehicle.

**In step 302, the electronic device performs sign detection on the multiple images and performs target detection on the multiple images in response to detecting that no no-parking sign is contained in the multiple images.**

In step 301, the camera module sends each image as captured to the electronic device, then in step 302, the electronic device performs sign detection on the image to detect whether the no-parking sign is contained in the image. In step 301, when the quantity of images acquired by the camera module reaches the preset quantity, the preset quantity of images is sent to the electronic device together, then in step 302, the electronic device may perform the sign detection on the preset quantity of images at the same time to detect whether the no-parking sign is contained in the preset quantity of images. In step 301, the camera module sends multiple images captured in a cycle together to the electronic device, then in step 302, the electronic device may perform sign detection on the multiple images in the cycle to detect whether the no-parking sign is contained in the multiple images in the cycle.

In the case that the no-parking sign is detected in the multiple images, the electronic device generates a warning signal and broadcasts a third voice message via an audio component in the first vehicle, the third voice message is used to remind the driver that parking is prohibited at the second position where the first vehicle is currently located. In the case that the no-parking sign is not detected in the multiple images, the electronic device performs a target detection on the multiple images to detect whether the target object is contained in the images. In the case that the target object is detected in the multiple images, step 303 is executed; and in the case that the target object is not detected in the multiple images, the processing is finished.

In the embodiments of the present disclosure, the target object is an object responsible for managing parking violations. For example, the target object is a road traffic management personnel or a driver of another vehicle; the target object may also be a road volunteer or a pedestrian whose passage has been affected, which is not limited herein.

In the case that the target object is a road traffic management personnel, the process of the target detection by the electronic device on the multiple images may be as follows: performing the target detection on each of the multiple images; extracting a clothing feature of a human target in response to detecting the human target is contained in the image; determining that the target object is detected in the image in the case that the clothing feature of the human target matches a preset clothing feature; and determining that the target object is not detected in the image in the case that the clothing feature of the human target does not match the preset clothing feature. The preset clothing feature is a clothing feature of the object responsible for managing parking violations.

In the embodiments, the electronic device may perform the target detection on the image by a target recognition model to determine whether the human target is contained in the image. In the case that the human target is contained in the image, the clothing feature of the human target is extracted by the target recognition model to determine whether the clothing feature of the human target matches the preset clothing feature, and in the case that the clothing feature of the human target matches the preset clothing feature, it is determined that the target object is detected in the target object.

The clothing feature may include at least one of a color feature, a text feature, or a hat feature. For example, the preset clothing feature is that the clothing of the human target is green and the clothing has a text that indicates the human target is a road traffic management personnel. Accordingly, if the clothing feature includes a color feature and a text feature, the electronic device determines whether the color feature of the human target is green and whether the text feature includes the text that matches the above features. In the case that the color feature of the human target is green and includes the corresponding text, the clothing feature of the human target is determined to match the preset clothing feature, indicating that the human target is the road traffic management personnel, that is, the target object is detected. In the case that the color feature of the human target is not green, or does not include the corresponding text, then the clothing feature of the human target is determined not to match the preset clothing feature, indicating that the human target is not road traffic management personnel, that is, the target object is not detected.

In the embodiments of the disclosure, the clothing of the road traffic management personnel is distinctive and can be easily captured and recognized. Therefore, it can be identified by the target recognition model.

The target recognition model may be trained by the following process. The electronic device acquires a training image set and determines the attribute label and the clothing label corresponding to the human target in the training image set. The attribute label is used to indicate whether the human target is a target object, and the clothing label is used to indicate whether the clothing feature of the human target matches the clothing feature of the target object. The model is trained based on the training image set and the attribute labels and clothing labels, the parameter structure of the model is adjusted during the training process, and the first machine learning model is acquired when the loss function tends to be stable. After acquiring the first machine learning model, the electronic device first verifies the first machine learning model based on a verifying image set, and after passing the verification, the first machine learning model is tested based on a testing image set, and after passing the test, the first machine learning model is determined as the target recognition model.

The training image set includes multiple training images, which are not limited by the embodiments of the present disclosure. In the case that the human target is the target object, then the corresponding attribute label and the clothing label may be 1, and in the case that the human target is not the target object, then the corresponding attribute label and the clothing label may be 0. Alternatively, the electronic device may perform model training based on a neural network, and the neural network may be a You Only Look Once version 4 (yolo_v4) neural network, which may be a residual network, a Faster RCNN, or other neural network, without specific qualification on this.

The ratio of the training image set, the verifying image set, and the testing image set may be set and changed as needed. For example, the ratio of the training image set, the verifying image set, and the testing image set is 7:2:1.

In the case that the target object is a driver of another vehicle, the process of the target detection by the electronic device on the multiple images may be as follows: performing the target detection on each of the multiple images; determining that the target object is detected in the image in response to detecting the human target is contained in the image and the human target is getting off from the another vehicle, and determining that no target object is detected in the image in response to detecting the human target is not contained in the image or the human target is not getting off from the another vehicle.

**In step 303, the electronic device determines a forward direction of a target object in response to detecting that the target object is contained in the multiple images.**

In the case that the target object is detected in the multiple images, the electronic device determines the forward direction of the target object by a face detection model. For each image in which the target object is detected, the electronic device performs the face detection on the image, if a human face is detected in the image, the forward direction of the target object is determined to be toward the first vehicle, and if no face is detected in the image, the forward direction of the target object is determined to be away from the first vehicle.

In some embodiments of the present disclosure, the face detection model and the target recognition model are two independent models, or integrated into a single model, which is not limited herein. Among other things, the model as integrated has the function of detecting the target object as well as the face at the same time.

**In step 304, the electronic device determines a first distance in response to detecting that the forward direction of the target object is toward the first vehicle.**

The first distance is a distance between a first position and a second position, the first position is a position where the target object is located and the second position is a position where the first vehicle is located.

The electronic device may obtain a shooting parameter of the camera module, determine a distance between a position of the target object in the image and a position of the first vehicle, and acquire the first distance by correcting the distance based on the shooting parameter.

The shooting parameter is the ratio of the object to be reduced when the camera module shoots the object. For example, if the real size of the object is a first size, and the size of the object in the image captured by the camera module is a second size, the shooting parameter is a ratio of the first size to the second size. In the embodiments, the step of the electronic device acquiring the first distance by correcting the distance based on the shooting parameter includes: the electronic device acquiring the first distance by determining the product of the shooting parameter and the distance.

**In step 305, the electronic device determines a first quantity in response to detecting that the forward direction of the target object is toward the first vehicle.**

The electronic device determines from the image a quantity of second vehicles located between the first position and the second position, to acquire the first quantity.

**In step 306, the electronic device determines a first duration based on the first quantity.**

In some embodiments, the electronic device performs action recognition on the target object to acquire an action recognition result of the target object; a second duration is determined in the case that the action recognition result includes the target action, where the target action is an action performed by the target object based on the parking position of the second vehicle, and the second duration is the duration required for the target object to complete the target action; and the first duration is determined based on the first quantity and the second duration.

The target action is an action performed by the target object in the case that the second vehicle is parked illegally. The target action may consist of either a single action or multiple actions. In the case that the target action consists of a single action, it could be the target object using a device to take a photo of the vehicle's license plate or making a gesture to signal the vehicle to move away. In the case that the target action consists of multiple actions, the multiple actions may include an action of the target object holding a device to photograph a license plate, an action of the target object holding an object for registration, and an action of the target object affixing a notification document to the vehicle, etc., which is not limited by the embodiments of the present disclosure.

The electronic device may determine the first image in which the target object starts to perform the target action and the last image in which the target action finishes the target action from the multiple images. Then, it determines the time interval between the shooting time of the first image and the shooting time of the last image, and takes the time interval as the second duration.

The second duration is the duration required for the target object to complete the target action for the second vehicle located between the first position and the second position. Thus, the first duration required for the target object to move from the first position to the second position is the product of the second duration and the first quantity. Accordingly, the step of determining the first duration by the electronic device based on the first quantity and the second duration may be as follows: the electronic device determines the product of the second duration and the first quantity to acquire the first duration.

In the embodiments, the electronic device performs action recognition on the target object by the action recognition model to acquire an action recognition result. The electronic device determines whether the target action is contained in the action recognition result, and determines the second duration in the case that the target action is contained in the action recognition result, and ends in the case that the target action is not contained in the action recognition result.

In some embodiments of the present disclosure, the action recognition model may be trained by the following process. The electronic device acquires a training video set, the training video set includes target actions of human targets, which are target objects or non-target objects. The electronic device conducts a model training based on the training video set and its corresponding target actions to acquire the second machine learning model. After acquiring the second machine learning model, the electronic device may also first verify the second machine learning model based on a verifying video set, and after passing the verification, the second machine learning model is tested based on a testing video set, and after passing the test, the second machine learning model is determined as the action recognition model.

The electronic device may perform the model training based on the neural network, which may be a recurrent neural network (RNN) or other deep learning neural network, which is not limited herein. The ratio of the training video set, the verifying video set, and the testing video set may be set and changed as needed. For example, the ratio of the training video set, the verifying video set, and the test video set is 7:2:1.

**In step 307, the electronic device generates a warning signal and broadcasts a first voice message, the first voice message contains the first duration and the first distance.**

In the case that the action recognition result includes the target action, the electronic device determines that the second vehicle is parked illegally, that is, the parking position of the second vehicle is a no-parking area. Since the second vehicle is located in front of or behind the first vehicle, the position where the first vehicle is located is also a no-parking area. In this case, the electronic device may issue the warning signal via the audio component and broadcast the first voice message via the audio component, the first voice message contains the first duration and the first distance and is used to remind the driver of the first vehicle to drive away from the second position. For example, the first voice message is "The target object is 50 meters away from the current position and is expected to arrive in 10 minutes. Please leave as soon as possible".

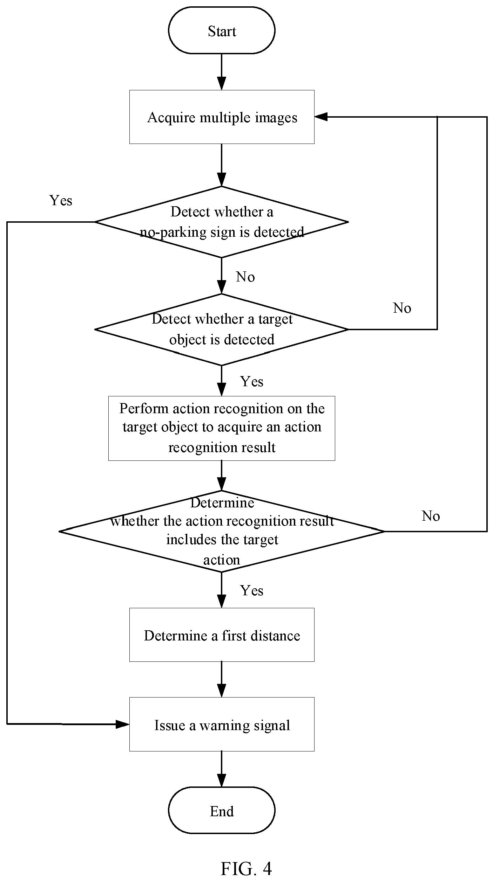

In some embodiments of the present disclosure, the electronic device performs the action recognition on the target object by the action recognition model in response to determining that the forward direction of the target object is toward the first vehicle, so as to acquire the action recognition result of the target object; the first distance is determined in the case that the action recognition result includes the target action; and the warning signal is issued based on the first distance, see FIG. 4.

In the embodiments, taking the target object as a road traffic management personnel as an example, the effects that the electronic device can achieve are as follows: in the case that the target object is the road traffic management personnel and the target object does not perform the target action, the electronic device will not issue the warning signal; in the case that the target object is not the road traffic management personnel and the target object performs the target action, the electronic device will also not issue the warning signal; in the case that the target object is not the road traffic management personnel and the target object does not perform the target action, the electronic device does not emit the warning signal; in the case that the target object is the road traffic management personnel and the target object performs the target action, the electronic device determines the first distance and then issues the warning signal based on the first distance.

**In step 308, the electronic device determines a third position where the first vehicle is allowed to park, acquires a navigation route from the second position to the third position, and broadcasts the navigation route.**

A map application is installed in the electronic device. The electronic device may send a location acquisition request to a server of the map application, the location acquisition request carries location information of the second position and is used to request to acquire a third position whose distance from the second position does not exceed a first preset distance. Based on the location acquisition request, the server of the map application determines the third position and returns the third position to the electronic device.

There may be either one or multiple third positions. When there are multiple third positions, the electronic device selects the one closest to the second position. Alternatively, when there are multiple third positions, the electronic device determines the destination of the current journey of the first vehicle and then picks the third position closest to this destination. For example, if the destination of the current journey of the first vehicle is a shopping mall, the electronic device determines the third position closest to the shopping mall from the multiple third positions. Subsequently, based on the navigation route from the second position to the selected third position, the electronic device instructs the driver of the first vehicle to drive the vehicle to the third position for parking, which reduces the walking distance for the driver of the first vehicle and enhances the driving experience.

The electronic device determines a navigation route that takes the shortest time to travel from the second position to the third position or determines a navigation route that has the best road traffic conditions for traveling from the second position to the third position, and broadcasts the navigation route via the audio component to direct the driver of the first vehicle to travel the first vehicle to the third position for parking, thereby satisfying the driver's parking needs.

For a road without a no-parking sign, the driver may be uncertain whether parking is prohibited on the road. If the road indeed prohibits parking but the driver is unaware, the parking violation is likely to occur in this case, thereby disrupting the travel of other drivers. According to the embodiments of the present disclosure, when a road traffic management personnel is detected near the first vehicle, it indicates that parking is prohibited at the current location, then the driver is reminded to move the vehicle, thereby avoiding parking violations. When a driver of another vehicle is detected near the vehicle, and the driver makes a gesture indicating the need for the vehicle to leave, it indicates that parking is prohibited at the current location or parking at the current location will affect the traveling of other drivers, then the driver is reminded to move the vehicle.

Embodiments of the present disclosure provide a vehicle warning method. In the case that no no-parking sign near the vehicle is determined through image recognition technology when the driver parks the vehicle, the method determines whether there is a target object, who is responsible for managing parking violations, approaching the first vehicle. In the case that the target object is approaching the first vehicle, it indicates that the current road segment, despite lacking the no-parking sign, prohibits parking. In this case, a warning signal is generated to remind the driver against parking at the current location, thereby preventing parking violations and ensuring unobstructed traffic flow for other drivers.

Moreover, the method also determines a navigation route between the third position where parking is allowed and the second position where the first vehicle is located, the navigation route guides the driver to go to the third position to park. In this way, the method not only avoids parking violations but also satisfies the parking needs of the driver.

In the case that parking is prohibited at the current location and the driver has parked the vehicle at the current location unknowingly, but the driver is not in the vehicle, the electronic device automatically activates the vehicle relocation reminder function. Upon generating the warning signal, the electronic device sends a vehicle relocation notification to the terminal device of the driver to notify the driver to move the vehicle. Alternatively, if the driver manually enables the vehicle relocation reminder function before exiting the vehicle, the electronic device will similarly send the vehicle relocation notification to the terminal device of the driver when the warning signal is generated, thereby reminding the driver to move the vehicle.

In some embodiments, in the case that the target object is detected and the forward direction of the target object is toward the first vehicle and the driver is not in the first vehicle, the electronic device determines a second distance, determines a third duration based on the second distance, and sends the vehicle relocation notification to the terminal device of the driver based on the first duration and the third duration.

The second distance is a distance between the fourth position and the second position, the fourth position is a position where the driver is located, and the third duration is a duration required for the driver to move from the fourth position to the second position.

In the embodiments, the electronic device sends a position acquisition request to a terminal device of the driver. The terminal device, in response to the position acquisition request, determines the fourth position where the terminal device is currently located, and sends the fourth position to the electronic device. The electronic device determines a distance between the fourth position and the second position to acquire the second distance. The second distance may be a straight line distance between the fourth position and the second position, or the farthest distance between the fourth position and the second position, or the nearest distance between the fourth position and the second position, or a navigation distance between the fourth position and the second position, which is not limited herein.

In the case that the second distance is not greater than the second preset distance, then the third duration may be the duration required for the driver to walk from the fourth position to the second position. Accordingly, the electronic device determines the third duration based on the walking speed of the driver and the second distance. In the case that the second distance is greater than the second preset distance, then the third duration may be a duration required for the driver to ride from the fourth position to the second position. Accordingly, the electronic device determines the third duration based on the riding speed and the second distance. Of course, the electronic device may also determine the third duration in other ways, which is not limited by the embodiments of the present disclosure.

In the embodiments, the electronic device determines a duration difference between the first duration and the third duration, determines an urgency level for vehicle relocation based on the duration difference, and sends the vehicle relocation notification to the terminal device, wherein the vehicle relocation notification contains the urgency level for vehicle relocation. The urgency level for vehicle relocation has a negative correlation with the duration difference, i.e., the larger the duration difference is, the lower the urgency level for vehicle relocation is; the smaller the duration difference is, the higher the urgency level for vehicle relocation is.

The electronic device may predetermine a correspondence between the duration difference range and the urgency level for vehicle relocation. Different duration difference ranges correspond to different urgency levels for vehicle relocation, and the smaller the duration difference range is, the higher the urgency level for vehicle relocation is. Based on the correspondence, the electronic device determines the duration difference range in which the duration difference is located, and then determines the urgency level for vehicle relocation corresponding to the duration difference range. The driver then moves the vehicle as soon as possible based on the urgency level for vehicle relocation, thereby avoiding parking violations and preventing disruptions to other drivers' travel.

In some embodiments, the electronic device directly sends the vehicle relocation notification to the terminal device. The vehicle relocation notification contains the first duration and the third duration, so that the driver determines the urgency level for vehicle relocation based on the first duration and the third duration, and then moves the car as soon as possible.

In some embodiments of the present disclosure, the electronic device sends the vehicle relocation notification to the terminal device and the vehicle relocation notification also carries a target image, which may be an image of the target object as detected or an image of the target object making the target action, without any specific limitation thereon, so that the driver moves the vehicle as soon as possible according to the target image.

In some embodiments, in the case that the target object is detected and the forward direction of the target object is towards the first vehicle and the driver is not in the first vehicle, the electronic device sends the vehicle relocation notification directly to the terminal device of the driver, and the vehicle relocation notification is used to notify the driver to move the first vehicle.

In some embodiments, the vehicle relocation notification carries the navigation route from the second position to the third position, along with options for whether to move the vehicle (Move Vehicle and Do Not Move Vehicle). When receiving the vehicle relocation notification, the terminal device of the driver displays the notification, allowing the driver to click the "Move Vehicle" option. The terminal device, in response to triggering the Move Vehicle option, sends a vehicle movement command to the electronic device. The electronic device receives the vehicle movement command, and in response to the vehicle movement command, moves the first vehicle from the second position to the third position based on the navigation route from the second position to the third position. Furthermore, after moving the first vehicle from the second location to the third location, the electronic device sends a notification message to the terminal device of the driver, which is used to inform the driver that the first vehicle is now parked at the third position.

It should be noted that the vehicle relocation notification may be sent in the form of text messages, pop-up messages, emails, client reminder messages, or other forms, which is not limited by the embodiments of the present disclosure.

In some embodiments, in the case that the target object is detected and the forward direction of the target object is toward the first vehicle and the driver is not in the first vehicle, the electronic device drives the first vehicle from the second position to the third position based on the navigation route from the second position to the third position by means of the driverless function. Furthermore, after moving the first vehicle from the second location to the third location, the electronic device sends a notification message to the terminal device of the driver, which is used to inform the driver that the first vehicle is now parked at the third location.

In some embodiments of the present disclosure, the vehicle relocation reminder function is activated during the parking state, there is no temporal overlap with other vehicle functions that require computing power, thus no additional computing power is required.

In some embodiments of the present disclosure, in the case that the target object is advancing towards the first vehicle, the distance between the second position where the first vehicle is located and the target object is less than the preset distance, and the driver is not in the first vehicle, the electronic device broadcasts a second voice message, the second voice message is used to remind the target object that the driver has been instructed to move the vehicle.

In the embodiments, in the case that the target object is a road traffic management personnel, the target object is closer to the first vehicle or arrives near the first vehicle but the driver has not yet arrived at the position where the first vehicle is located, the electronic device broadcasts a second voice message via the audio component, thereby reminding the target object that the driver is on the way.

In some embodiments, in the case that the first distance is less than a preset distance and the driver is not in the first vehicle, the electronic device further determines a fifth position where the driver is located and a fourth duration required for the driver to move from the fifth position to the second position. The second voice message includes at least one of the fifth position and the fourth duration.

In the embodiments, since the second voice message carries at least one of the fifth position and the fourth time duration when the electronic device broadcasting the second voice message, the target object can clearly understand the current position of the driver and the time required for the driver to reach the second position. In the case that the target object is a road traffic management personnel, the road traffic management personnel may determine whether or not to take the target action on the first vehicle based on the fifth position and the fourth duration. In the case that the target object is a driver of another vehicle, the target object may wait patiently for the driver to relocate the first vehicle.

In the embodiments of the present disclosure, the electronic device notifies the driver to move the vehicle in the case that the driver is not in the first vehicle, thereby avoiding affecting the travel of drivers of other vehicles.

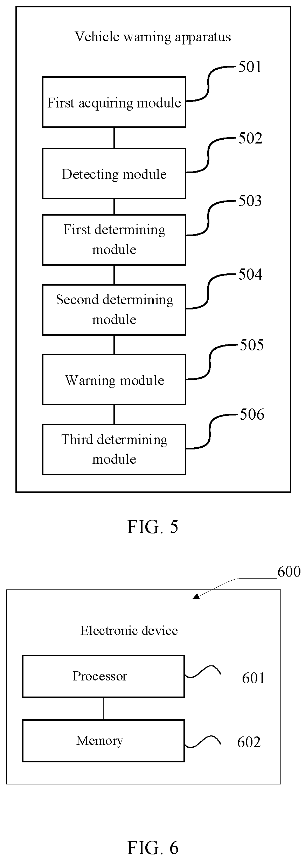

FIG. 5 is a structural schematic diagram of a vehicle warning apparatus according to some embodiments of the present disclosure. The apparatus includes a first acquiring module 501, a detecting module 502, a first determining module 503, a second determining module 504, a warning module 505, and a third determining module 506.

The first acquiring module 501 is configured to acquire multiple images captured by a camera module of a first vehicle.

The detecting module 502 is configured to perform sign detection on the multiple images, and performing target detection on the multiple images in response to detecting that no no-parking sign is contained in the multiple images.

The first determining module 503 is configured to determine a forward direction of a target object in response to detecting that the target object is contained in the multiple images, wherein the target object is an object responsible for managing parking violations.

The second determining module 504 is configured to determine a first distance in response to detecting that the forward direction of the target object is toward the first vehicle, wherein the first distance is a distance between a first position and a second position, the first position being a position where the target object is located, and the second position being a position where the first vehicle is located.

The warning module 505 is configured to generate a warning signal based on the first distance, wherein the warning signal is used to remind a driver of the first vehicle not to park the first vehicle at the second position.

The third determining module 506 is configured to determine a third position where the first vehicle is allowed to park, acquire a navigation route from the second position to the third position, and broadcast the navigation route.

In some embodiment, one or more second vehicles are contained in the multiple images, and the one or more second vehicles are located in front of or behind the first vehicle.

The warning module 505 is configured to determine a first quantity, wherein the first quantity is a quantity of second vehicles located between the first position and the second position; determine a first duration based on the first quantity, wherein the first duration is a duration required for the target object to move from the first position to the second position; and generate the warning signal and broadcast a first voice message, wherein the first voice message contains the first duration and the first distance, and the first voice message is used to remind the driver to move the first vehicle away from the second position.

In some embodiments, the warning module 505 is configured to: perform action recognition on the target object to acquire an action recognition result of the target object; determine a second duration in the case that the action recognition result includes a target action, wherein the target action is an action performed by the target object based on a parking position of the second vehicle, and the second duration is a duration required for the target object to complete the target action; and determine the first duration based on the first quantity and the second duration.

In some embodiments, the detecting module 502 is configured to: perform the target detection on each of the plurality of images; extract a clothing feature of a human target in response to detecting that the human target is contained in the image; and determine that the target object is detected in the image in the case that the clothing feature of the human target matches a preset clothing feature, wherein the preset clothing feature is a clothing feature of the object responsible for managing parking violations.

In some embodiments, the apparatus further includes: a fourth determining module, a fifth determining module, and a sending module.

The fourth determining module is configured to determine a second distance in a case that the driver is not in the first vehicle, wherein the second distance is a distance between a fourth position and the second position, the fourth position being a position where the driver is located.

The fifth determining module is configured to determine a third duration based on the second distance, wherein the third duration is a duration required for the driver to move from the fourth position to the second position.

The sending module is configured to send a vehicle relocation notification to a terminal device of the driver based on the first duration and the third duration, wherein the vehicle relocation notification is used to notify the driver to move the first vehicle.

In some embodiments, the sending module is configured to: determine a duration difference between the first duration and the third duration; determine an urgency level for vehicle relocation based on the duration difference; and send the vehicle relocation notification to the terminal device, wherein the vehicle relocation notification contains the urgency level for vehicle relocation.

In some embodiments, the apparatus further includes a broadcasting module. The broadcasting module is configured to broadcast a second voice message in the case that the first distance is less than a preset distance and the driver is not in the first vehicle, wherein the second voice message is used to remind the target object that the driver has been instructed to move the vehicle.

Embodiments of the present disclosure provide a vehicle warning apparatus. In the case that no no-parking sign near the vehicle is determined through image recognition technology when the driver parks the vehicle, the method determines whether there is a target object, who is responsible for managing parking violations, approaching the first vehicle. In the case that the target object is approaching the first vehicle, it indicates that the current road segment, despite lacking the no-parking sign, prohibits parking. In this case, a warning signal is generated to remind the driver against parking at the current location, thereby preventing parking violations and ensuring unobstructed traffic flow for other drivers.

Moreover, the apparatus also determines a navigation route between the third position where parking is allowed and the second position where the first vehicle is located, the navigation route guides the driver to go to the third position to park. In this way, the method not only avoids parking violations but also satisfies the parking needs of the driver.

It should be noted that the vehicle warning apparatus according to the above embodiments is only exemplified by the division of the above-described various functional modules. In practical applications, the above functions can be allocated to be completed by different functional modules as needed, that is, the internal structure of the electronic device can be divided into different functional modules to achieve all or part of the functions described above. Additionally, the vehicle warning apparatus provided in the above embodiments and the vehicle warning method embodiments belong to the same concept, and the specific implementation process is detailed in the method embodiments, which will not be repeated here.

A structural block diagram of the electronic device may be referred to in FIG. 6. The electronic device 600 may vary significantly depending on configuration or performance. The electronic device 600 includes a processor (central processing units, CPU) 601 and a memory 602, the memory 602 stores at least one piece of program code. The processor 601, when loading and executing the at least one piece of program code, is caused to perform the vehicle warning method of the above embodiments. In some embodiments, the electronic device 600 is further provided with components such as a wired or wireless network interface, a keyboard, and an input/output interface for input/output. Additionally, the electronic device 600 may include other components for realizing the functions of the device, which will not be discussed herein.

In some embodiments, a computer-readable storage medium is provided. The computer-readable storage medium stores at least one piece of program code. The at least one instruction, when loaded and executed by a processor, causes the processor to perform the vehicle warning method. In some embodiments, the storage medium is a non-transitory computer-readable storage medium, such as a read-only memory (ROM), a random access memory (RAM), a compact disc read-only memory (CD-ROM), magnetic tapes, floppy disks, and optical data storage devices.

In some embodiments, a computer program product is provided. The computer program product stores at least one piece of program code, the at least one piece of program code, when loaded and executed by a processor, causes the processor to perform the vehicle warning method of the above embodiments.

In some embodiments, the computer program product according to the embodiments of the present disclosure may be deployed to be executed on a single electronic device, or executed on multiple electronic devices located at a single location, or furthermore, executed on multiple electronic devices distributed across multiple locations and interconnected through a communication network. Such multiple electronic devices distributed across multiple locations and interconnected through the communication network can form a blockchain system.

A person of ordinary skill in the art may understand that all or some of the steps for realizing the above embodiments may be accomplished by hardware, or may be accomplished by a program that instructs the relevant hardware to accomplish them. The program may be stored in a computer-readable storage medium, and the storage medium mentioned above may be a read-only memory, a magnetic disk, an optical disc, or the like.

Described above are merely to facilitate the understanding of the technical solutions of the present disclosure by those skilled in the art and are not intended to limit the present disclosure. Any modifications, equivalent substitutions, improvements, and the like, made within the concept and principle of the present disclosure, should be included in the protection scope of the present disclosure.

## Claims

1. A vehicle warning method, comprising:
acquiring a plurality of images captured by a camera module of a first vehicle;
performing sign detection on the plurality of images, and performing target detection on the plurality of images in response to detecting that no no-parking sign is contained in the plurality of images;
determining a forward direction of a target object in response to detecting that the target object is contained in the plurality of images, wherein the target object is an object responsible for managing parking violations;
determining a first distance in response to detecting that the forward direction of the target object is toward the first vehicle, wherein the first distance is a distance between a first position and a second position, the first position being a position where the target object is located, and the second position being a position where the first vehicle is located;
generating a warning signal based on the first distance, wherein the warning signal is used to remind a driver of the first vehicle not to park the first vehicle at the second position; and
determining a third position where the first vehicle is allowed to park, acquiring a navigation route from the second position to the third position, and broadcasting the navigation route.

2. The method according to claim 1, wherein at least one second vehicle is contained in the plurality of images, the at least one second vehicle being located in front of or behind the first vehicle;
generating the warning signal based on the first distance comprises:
determining a first quantity, wherein the first quantity is a quantity of second vehicles located between the first position and the second position;
determining a first duration based on the first quantity, wherein the first duration is a duration required for the target object to move from the first position to the second position; and
generating the warning signal and broadcasting a first voice message, wherein the first voice message contains the first duration and the first distance, and the first voice message is used to remind the driver to move the first vehicle away from the second position.

3. The method according to claim 2, wherein determining the first duration based on the first quantity comprises:
performing action recognition on the target object to acquire an action recognition result of the target object;
determining a second duration in a case where the action recognition result comprises a target action, wherein the target action is an action performed by the target object based on a parking position of the second vehicle, and the second duration is a duration required for the target object to complete the target action; and
determining the first duration based on the first quantity and the second duration.

4. The method according to claim 1, wherein performing the target detection on the plurality of images comprises:
performing the target detection on each of the plurality of images;
extracting a clothing feature of a human target in response to detecting that the human target is contained in the image; and
determining that the target object is detected in the image in a case where the clothing feature of the human target matches a preset clothing feature, wherein the preset clothing feature is a clothing feature of the object responsible for managing parking violations.

5. The method according to claim 2 or 3, further comprising:
determining a second distance in a case where the driver is not in the first vehicle, wherein the second distance is a distance between a fourth position and the second position, the fourth position being a position where the driver is located;
determining a third duration based on the second distance, wherein the third duration is a duration required for the driver to move from the fourth position to the second position; and
sending a vehicle relocation notification to a terminal device of the driver based on the first duration and the third duration, wherein the vehicle relocation notification is used to notify the driver to move the first vehicle.

6. The method according to claim 5, wherein sending the vehicle relocation notification to the terminal device of the driver based on the first duration and the third duration comprises:
determining a duration difference between the first duration and the third duration;
determining an urgency level for vehicle relocation based on the duration difference; and
sending the vehicle relocation notification to the terminal device, wherein the vehicle relocation notification contains the urgency level for vehicle relocation.

7. The method according to claim 5, further comprising:
broadcasting a second voice message in a case where the first distance is less than a preset distance and the driver is not in the first vehicle, wherein the second voice message is used to remind the target object that the driver has been instructed to move the vehicle.

8. A vehicle warning apparatus, comprising:
a first acquiring module, configured to acquire a plurality of images captured by a camera module of a first vehicle;
a detecting module, configured to perform sign detection on the plurality of images, and performing target detection on the plurality of images in response to detecting that no no-parking sign is contained in the plurality of images;
a first determining module, configured to determine a forward direction of a target object in response to detecting that the target object is contained in the plurality of images, wherein the target object is an object responsible for managing parking violations;
a second determining module, configured to determine a first distance in response to detecting that the forward direction of the target object is toward the first vehicle, wherein the first distance is a distance between a first position and a second position, the first position being a position where the target object is located, and the second position being a position where the first vehicle is located;
a warning module, configured to generate a warning signal based on the first distance, wherein the warning signal is used to remind a driver of the first vehicle not to park the first vehicle at the second position; and
a third determining module, configured to determine a third position where the first vehicle is allowed to park, acquire a navigation route from the second position to the third position, and broadcast the navigation route.

9. The apparatus according to claim 8, wherein at least one second vehicle is contained in the plurality of images, and the at least one second vehicle is located in front of or behind the first vehicle;
the warning module is configured to:
determine a first quantity, wherein the first quantity is a quantity of second vehicles located between the first position and the second position;
determine a first duration based on the first quantity, wherein the first duration is a duration required for the target object to move from the first position to the second position; and
generate the warning signal and broadcast a first voice message, wherein the first voice message contains the first duration and the first distance, and the first voice message is used to remind the driver to move the first vehicle away from the second position.

10. The apparatus according to claim 9, wherein the warning module is configured to:
perform action recognition on the target object to acquire an action recognition result of the target object;
determine a second duration in a case where the action recognition result comprises a target action, wherein the target action is an action performed by the target object based on a parking position of the second vehicle, and the second duration is a duration required for the target object to complete the target action; and
determine the first duration based on the first quantity and the second duration.

11. The apparatus according to claim 8, wherein the detecting module is configured to:
perform the target detection on each of the plurality of images;
extract a clothing feature of a human target in response to detecting that the human target is contained in the image; and
determine that the target object is detected in the image in a case where the clothing feature of the human target matches a preset clothing feature, wherein the preset clothing feature is a clothing feature of the object responsible for managing parking violations.

12. The apparatus according to claim 9 or 10, further comprising:
a fourth determining module, configured to determine a second distance in a case that the driver is not in the first vehicle, wherein the second distance is a distance between a fourth position and the second position, the fourth position being a position where the driver is located;
a fifth determining module, configured to determine a third duration based on the second distance, wherein the third duration is a duration required for the driver to move from the fourth position to the second position; and
a sending module, configured to send a vehicle relocation notification to a terminal device of the driver based on the first duration and the third duration, wherein the vehicle relocation notification is used to notify the driver to move the first vehicle.

13. The apparatus according to claim 12, wherein the sending module is configured to:
determine a duration difference between the first duration and the third duration;
determine an urgency level for vehicle relocation based on the duration difference; and
send the vehicle relocation notification to the terminal device, wherein the vehicle relocation notification contains the urgency level for vehicle relocation.

14. The apparatus according to claim 12, further comprising:
a broadcasting module, configured to broadcast a second voice message in a case where the first distance is less than a preset distance and the driver is not in the first vehicle, wherein the second voice message is used to remind the target object that the driver has been instructed to move the vehicle.

15. An electronic device comprising a processor and a memory storing at least one piece of program code, wherein the processor, when loading and executing the at least one piece of program code, is caused to perform the vehicle warning method as defined in any one of claims 1 to 7.

16. A computer-storage medium storing at least one instruction therein, wherein the at least one instruction, when loaded and executed by a processor, causes the processor to perform the vehicle warning method as defined in any one of claims 1 to 7.

17. A computer program product storing at least one instruction therein, wherein the at least one instruction, when loaded and executed by a processor, causes the processor to perform the vehicle warning method as defined in any one of claims 1 to 7.
